# EUROPEAN PATENT APPLICATION

(11) **EP 4 568 385 A1**
(43) Date of publication of application: **11.06.2025**
(21) Application number: 23850508.5
(22) Date of filing: 07.08.2023
(51) Int. Cl.: H04W 72/04, H04W 72/23, H04L 5/14

(54) **METHOD AND DEVICE FOR TRANSMITTING UPLINK IN WIRELESS NETWORK**

(30) Priority: 05.08.2022 KR 20220097991; 04.08.2023 KR 20230102098
(71) Applicant: KT Corporation, Seongnam-si, Gyeonggi-do 13606 (KR)
(72) Inventor: PARK, Kyu Jin, Seongnam-si Gyeonggi-do 13606 (KR)
(74) Representative: Brevalex
(86) International application number: PCT/KR2023/011622
(87) International publication number: WO 2024/030009

(57) **Abstract**

Provided are a method and device for transmitting an uplink. The method may include: based on time division duplex (TDD) configuration information received from a base station, determining a format of a symbol as one of a downlink symbol, an uplink symbol, and a flexible symbol; receiving configuration information on an uplink subband and a downlink subband for full duplex communication; receiving additional information for uplink transmission in a reconfiguration symbol in which the uplink subband is configured, among symbols, formats of which have been determined as downlink symbols; and transmitting an uplink in the reconfiguration symbol on the basis of the additional information for uplink transmission in the reconfiguration symbol, wherein a frequency resource for uplink transmission is limited to an area within a frequency domain of the uplink subband.

## Description

### Technical Field

The disclosure relates to a method and device for transmitting an uplink in a next-generation wireless access network (hereinafter, "new radio (NR)").

### Background Art

Recently, the 3rd generation partnership project (3GPP) has approved the "Study on New Radio Access Technology", which is a study item for research on next-generation/5G radio access technology(hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting any NR system.

As part of such aspect, there is demand for a specific design capable of allowing an uplink to be transmitted in a symbol to which full-duplex communication is applied in a wireless network.

### Detailed Description of the Invention

### Technical Problem

The disclosure may provide a method and device for transmitting an uplink in NR.

### Technical Solution

In an aspect, the disclosure may provide a method for transmitting a uplink by a user equipment (UE). The method may include determining a format of a symbol as any one of a downlink symbol, an uplink symbol, and a flexible symbol based on time division duplex (TDD) configuration information received from a base station, receiving configuration information about an uplink subband and a downlink subband for full-duplex communication, receiving additional information for uplink transmission in a reconfiguration symbol where the uplink subband is configured among symbols whose format is determined as the downlink symbol, and transmitting the uplink in the reconfiguration symbol based on the additional information for the uplink transmission in the reconfiguration symbol, wherein a frequency resource for the uplink transmission is limited within a frequency domain of the uplink subband.

In another aspect, the disclosure may provide a method for receiving an uplink by a base station. The method may include transmitting time division duplex (TDD) configuration information, transmitting configuration information about an uplink subband and a downlink subband for full-duplex communication, transmitting additional information for uplink reception in a reconfiguration symbol where the uplink subband is configured among symbols whose format is determined as the downlink symbol based on the TDD configuration information, and receiving the uplink in the reconfiguration symbol based on the additional information for the uplink reception in the reconfiguration symbol, wherein a frequency resource for the uplink reception is limited within a frequency domain of the uplink subband.

In another aspect, the disclosure may provide a user equipment (UE) transmitting an uplink. The UE may include a transmitter, a receiver, and a controller controlling an operation of the transmitter and the receiver, wherein the controller determines a format of a symbol as any one of a downlink symbol, an uplink symbol, and a flexible symbol based on time division duplex (TDD) configuration information received from a base station, receives configuration information about an uplink subband and a downlink subband for full-duplex communication, receives additional information for uplink transmission in a reconfiguration symbol where the uplink subband is configured among symbols whose format is determined as the downlink symbol, and transmits the uplink in the reconfiguration symbol based on the additional information for the uplink transmission in the reconfiguration symbol, and wherein a frequency resource for the uplink transmission is limited within a frequency domain of the uplink subband.

In another aspect, the disclosure may provide a base station receiving an uplink. The disclosure may include a transmitter, a receiver, and a controller controlling an operation of the transmitter and the receiver, wherein the controller transmits time division duplex (TDD) configuration information, transmitting configuration information about an uplink subband and a downlink subband for full-duplex communication, transmits additional information for uplink reception in a reconfiguration symbol where the uplink subband is configured among symbols whose format is determined as the downlink symbol based on the TDD configuration information, and receives the uplink in the reconfiguration symbol based on the additional information for the uplink reception in the reconfiguration symbol, wherein a frequency resource for the uplink reception is limited within a frequency domain of the uplink subband.

### Advantageous Effects

According to the embodiments, uplink transmission in a slot or symbol with full-duplex communication applied is performed efficiently.

### Brief Description of the Drawings

FIG. 1 is a view schematically illustrating an NR wireless communication system in accordance with embodiments of the present disclosure.
FIG. 2 is a view schematically illustrating a frame structure in an NR system in accordance with embodiments of the present disclosure.
FIG. 3 is a view for explaining resource grids supported by a radio access technology in accordance with embodiments of the present disclosure.
FIG. 4 is a view for explaining bandwidth parts supported by a radio access technology in accordance with embodiments of the present disclosure.
FIG. 5 is a view illustrating an example of a synchronization signal block in a radio access technology in accordance with embodiments of the present disclosure.
FIG. 6 is a signal diagram for explaining a random access procedure in a radio access technology in accordance with embodiments of the present disclosure.
FIG. 7 is a view for explaining CORESET.
FIG. 8 is a view illustrating an example of symbol level alignment among different subcarrier spacings (SCSs) in accordance with embodiments of the present disclosure.
FIG. 9 is a view schematically illustrating a bandwidth part.
FIG. 10 is a flowchart illustrating a procedure of performing uplink transmission by a UE according to an embodiment.
FIG. 11 is a flowchart illustrating a procedure of performing uplink reception by a base station according to an embodiment.
FIGS. 12 and 13 are views illustrating a TDD frame in which a full-duplex subband is configured according to an embodiment.
FIG. 14 is a block diagram illustrating a UE according to another embodiment.
FIG. 15 is a block diagram illustrating a base station according to another embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

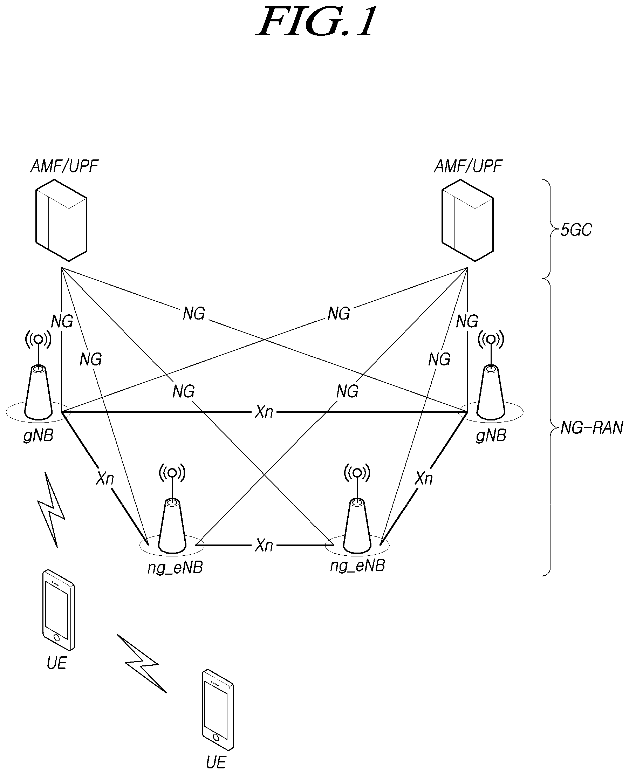

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

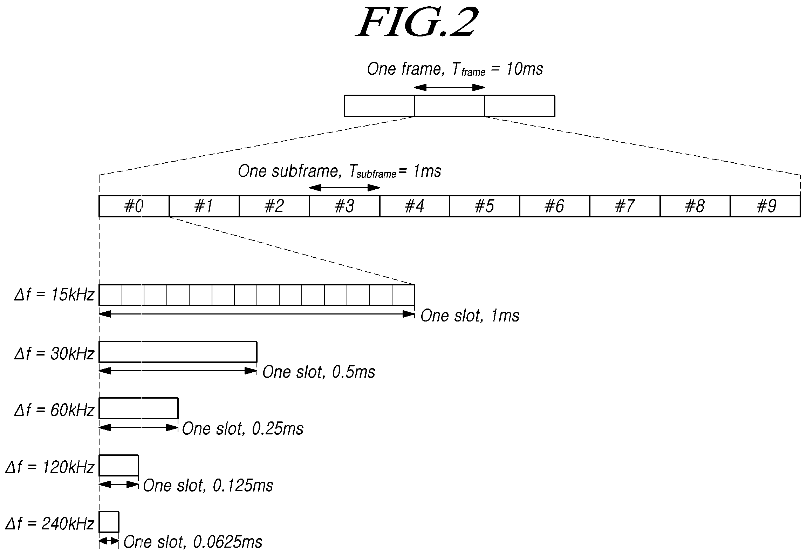

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

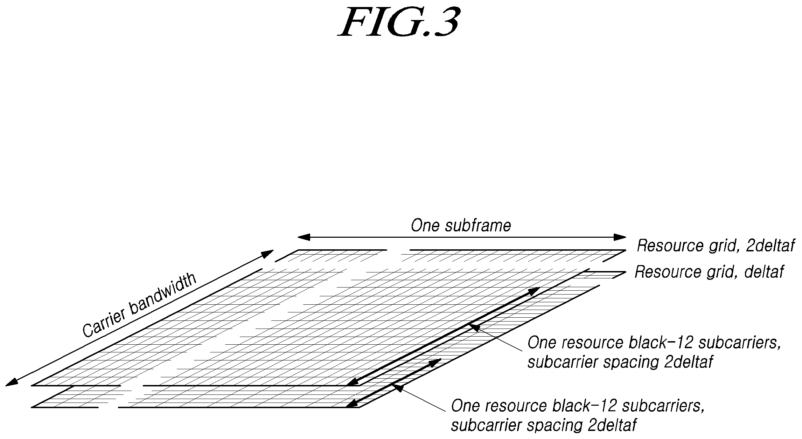

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

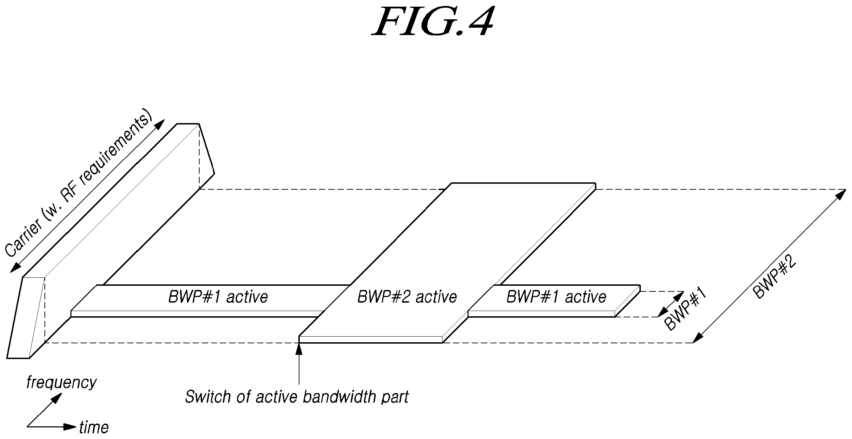

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

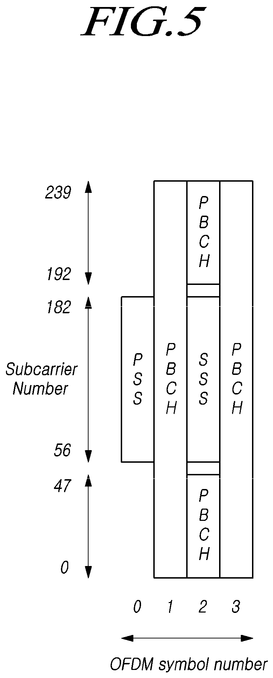

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB 1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB 1 transmission and the CORESET (control resource set) information used for scheduling of SIB 1 over a PBCH. The UE identifies scheduling information for SIB1 using SI-RNTI in the CORESET. The UE acquires SIB1 on the PDSCH according to scheduling information. The remaining SIBs other than SIB 1 may be periodically transmitted, or the remaining SIBs may be transmitted according to the request of the UE.

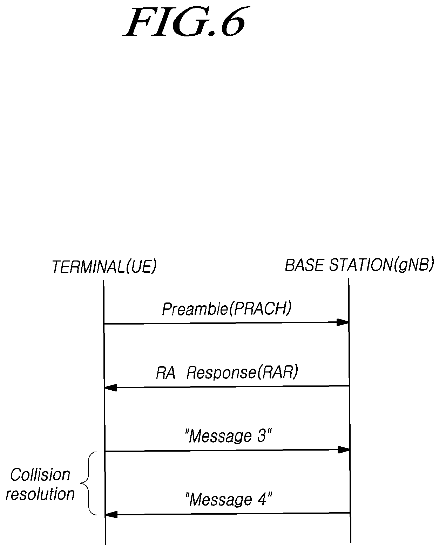

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

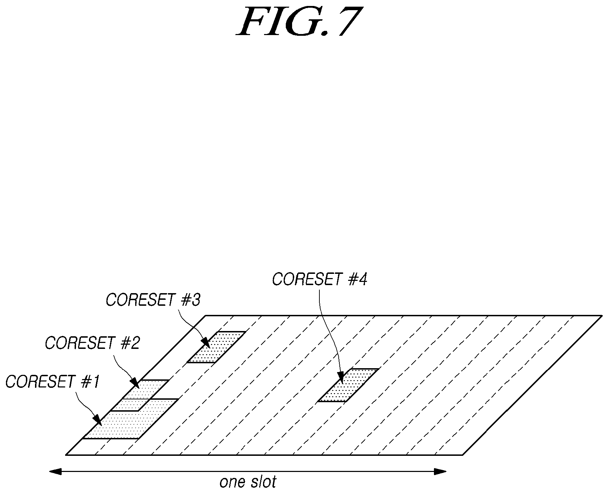

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

### NR(New Radio)

The NR is required to be designed not only to provide an improved data transmission rate but also to meet various QoS requirements for each detailed and specific usage scenario, compared to the LTE/LTE-Advanced. In particular, an enhanced mobile broadband (eMBB), massive machine-type communication (mMTC), and ultra reliable and low latency communication (URLLC) are defined as representative usage scenarios of the NR. In order to meet requirements for each usage scenario, it is required to design the NR to have a more flexible frame structure as compared to the LTE/LTE-Advanced.

Since each usage scenario imposes different requirements for data rates, latency, coverage, etc., there arises a need for a method of efficiently multiplexing numerology-based (e.g., a subcarrier spacing (SCS), a subframe, a transmission time interval (TTI), etc.) radio resource units different from each other, as a solution for efficiently satisfying requirements according to usage scenarios over a frequency band provided to an NR system.

To this end, there have been discussions on i) methods of multiplexing numerologies having subcarrier spacing (SCS) values different from one another based on TDM, FDM or TDM/FDM over one NR carrier, and ii) methods of supporting one or more time units in configuring a scheduling unit in the time domain. In this regard, in the NR, a definition of a subframe has been given as one type of a time domain structure. In addition, as a reference numerology to define a corresponding subframe duration, a single subframe duration is defined as having 14 OFDM symbols of normal CP overhead based on 15 kHz subcarrier spacing (SCS), like the LTE. Therefore, the subframe of the NR has the time duration of 1 ms. Unlike the LTE, since the subframe of the NR is an absolute reference time duration, a slot and a mini-slot may be defined as a time unit for actual UL/DL data scheduling. In this case, the number of OFDM symbols which constitutes a slot, a value of y, has been defined as y = 14 regardless of the numerology.

Therefore, a slot may be made up of 14 symbols. In accordance with a transmission direction for a corresponding slot, all symbols may be used for DL transmission or UL transmission, or the symbols may be used in the configuration of a DL portion + a gap + a UL portion.

Further, a mini-slot has been defined to be made up of fewer symbols than the slot in a numerology (or SCS), and as a result, a short time domain scheduling interval may be configured for UL/DL data transmission or reception based on the mini-slot. Also, a long time domain scheduling interval may be configured for the UL/DL data transmission or reception by slot aggregation.

Particularly, in the case of the transmission or reception of latency critical data, such as the URLLC, when scheduling is performed on a slot basis based on 1 ms (14 symbols) defined in a frame structure based on a numerology having a small SCS value, for example, 15 kHz, latency requirements may be difficult to be satisfied. To this end, a mini-slot made up of fewer OFDM symbols than the slot may be defined, and thus the scheduling for the latency critical data, such as the URLLC, may be performed based on the mini-slot.

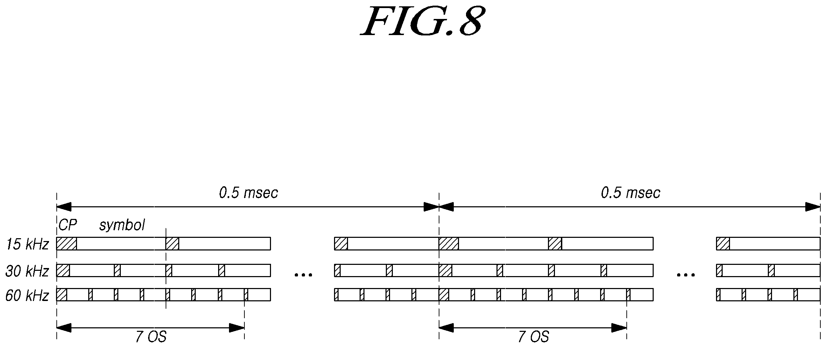

As described above, it is also contemplated to schedule the data according to the latency requirement based on the length of the slot (or minislot) defined by the numerology by supporting the numerology with the different SCS values in one NR carrier by multiplexing them in the TDM and/or FDM manner. For example, as shown in FIG. 8, when the SCS is 60 kHz, the symbol length is reduced to about 1/4 of that of the SCS 15 kHz. Therefore, when one slot is made up of 14 OFDM symbols, the slot length based on 15 kHz is 1 ms whereas the slot length based on 60 kHz is reduced to about 0.25 ms.

Thus, since different SCSs or different TTI lengths from one another are defined in the NR, technologies have been developed for satisfying requirements of each of the URLLC and the eMBB.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

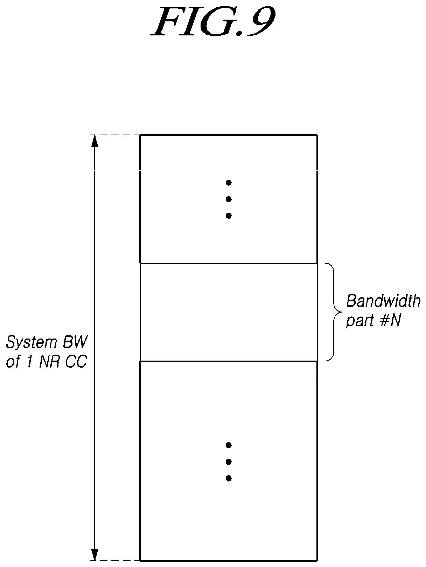

However, the NR is designed to support the UE of NR having different transmission/reception bandwidth capabilities over a single wideband NR CC. Accordingly, it is required to configure one or more bandwidth parts (BWPs) including subdivided bandwidths for an NR CC as shown FIG. 9, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

Hereinafter, a method for transmitting an uplink in a wireless network according to an embodiment will be described in detail with reference to the related drawings.

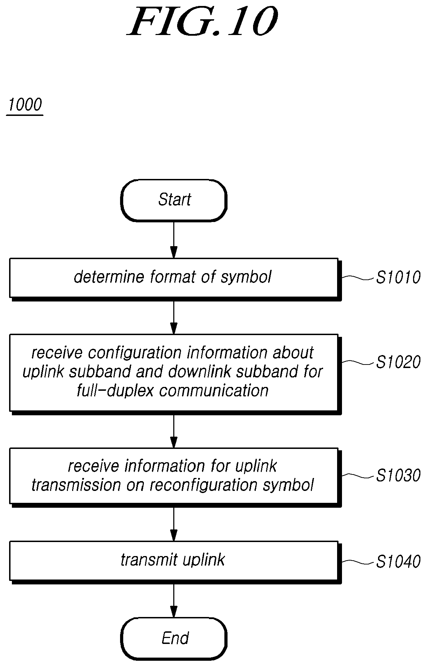

FIG. 10 is a flowchart illustrating a procedure 1000 for a UE to perform uplink transmission in a full-duplex communication mode according to an embodiment.

Referring to FIG. 10, the UE may receive time division duplex (TDD) configuration information from a base station and determine a format of a symbol as any one of a downlink symbol, an uplink symbol, and a flexible symbol based on the received TDD configuration information (S 1010).

The time division duplex (TDD) method divides and uses time-domain radio resources into a downlink slot and an uplink slot, and the UE may receive the TDD configuration information from the base station to determine the format of the symbol. In this case, the TDD configuration information may include i) information on the format of the slot and ii) information for determining the format of the symbol in the slot, and the TDD configuration information may be received through higher layer signaling or L1 signaling.

In other words, the UE may receive TDD configuration information for uplink-downlink (UL-DL) slot configuration from the base station. In this case, the corresponding slot configuration may be configured on a per-cell basis through higher layer signaling, e.g., cell-specific RRC signaling. In other words, patterns of DL symbols, UL symbols, and flexible symbols within a predetermined period may be configured through the RRC message *'tdd-UL-DL-ConfigurationCommon'* for the corresponding UL-DL slot configuration.

Further, the UE may receive an RRC message *'tdd-UL-DL-ConfigurationDedicated'* through UE-specific RRC signaling. Among the symbols configured by the above-described RRC message *'tdd-UL-DL-ConfigurationCommon',* only flexible symbols may be reconfigured as UL symbols, DL symbols, or flexible symbols by the RRC message 'tdd-*UL-DL-ConfigurationDedicated'.*

Alternatively, the UE may receive an indication of a dynamic slot format through a UE-group common PDCCH. In this case, the UE may dynamically receive the slot format through the DCI format 2_0.

Based on at least one of the above-described information, the UE may determine each symbol as either DL symbol, UL symbol or flexible symbol in relation to the time resource to be applied to the TDD scheme. In other words, based on the above-described cell-specific or UE group-common UL/DL slot/symbol configuration, the UE-specific downlink time domain resource assignment for an arbitrary UE is performed within the corresponding DL slot/symbol, and the UE-specific uplink time domain resource assignment for an arbitrary UE is performed within the UL slot/symbol.

Referring back to FIG. 10, the UE may receive configuration information for uplink subband and downlink subband for full-duplex communication (S1020).

The configuration information about the full-duplex communication mode may include information for transmitting/receiving data in the full-duplex communication mode between the UE and the base station. For example, the configuration information about the full-duplex communication mode may include information for full-duplex communication, such as information about a predetermined frequency band including a plurality of resource blocks used in the full-duplex communication mode.

According to an embodiment, when the base station supports full-duplex communication based on subband non-overlapping, a specific frequency resource in the same symbol in the TDD carrier is used for downlink transmission, and another frequency resource is used for uplink reception. In other words, a subband may be configured as an arbitrary frequency resource to support a transmission direction different from the transmission direction of DL, UL or flexible as set by the above-described TDD configuration information.

In other words, some frequency resources may be utilized for uplink transmission of the UE in any DL slot or DL symbol or may be utilized as a flexible symbol for downlink/uplink transition. Alternatively, some frequency resources in any UL slot or UL symbol may be configured for downlink transmission by the base station. As such, a UL full-duplex subband (FDSB) in any DL slot/symbol, or a DL FDSB in any UL slot/symbol may be configured. However, the term 'FDSB' is used only for convenience of description and the scope of the disclosure is not limited to this terminology; it may be referred to by other terms as needed.

When an uplink subband is configured using a symbol configured as a downlink symbol (e.g., when the above-described UL FDSB is configured), the used symbol may be referred to as a reconfiguration symbol. However, the term 'reconfiguration symbol' is used solely for convenience of description, and the scope of the disclosure is not limited to this term; it may be referred to by other terms, such as "mixed link (ML) symbol" or "subband full-duplex (SBFD) symbol," as needed.

The UE may receive configuration information for a UL FDSB configured within the downlink symbol or a DL FDSB configured within the uplink symbol. In this case, the UE may determine the corresponding symbol as the reconfiguration symbol.

Referring back to FIG. 10, the UE may receive (S1030) additional information for uplink transmission within the reconfiguration symbol in which the uplink subband is configured among symbols determined as the downlink symbol and transmit (S1040) the uplink in the reconfiguration symbol based on the additional information for uplink transmission in the reconfiguration symbol.

According to an embodiment, the UE may receive information about the bandwidth part (BWP, also referred to as an SBFD bandwidth part) for uplink transmission or downlink reception by the UE in the reconfiguration symbol that includes the uplink subband configured by the base station. In this case, the SBFD bandwidth part may be further subdivided into an SBFD DL BWP and an SBFD UL BWP.

The SBFD bandwidth part may include PUSCH configuration information and PUCCH resource set configuration information for uplink transmission by the UE in the reconfiguration symbol. Further, the SBFD bandwidth part may include CORESET configuration information and PDSCH configuration information for downlink reception of the UE in the reconfiguration symbol. Alternatively, the SBFD UL BWP may include PUSCH configuration information and PUCCH resource set configuration information for uplink transmission by the UE. Alternatively, the SBFD DL BWP may include PDSCH configuration information and CORESET configuration information for downlink reception by the UE.

However, frequency resources for uplink transmission may be configured to remain limited within the frequency domain of the uplink subband. In other words, the PUCCH resource set configuration information for uplink control information (UCI) transmission/reception within the SBFD bandwidth part may be limited to operations in the uplink frequency domain according to the configuration of the full-duplex communication subband (FDSB).

For example, in the reconfiguration symbol, an uplink FDSB may be configured, and the SBFD bandwidth part may be configured to include the uplink FDSB, a guard band, and a frequency band operating as a downlink. In this case, the PUCCH resource set for the corresponding SBFD bandwidth part may be configured only within the frequency band of the corresponding uplink FDSB, and the CORESET configuration may be limited to be made only within the frequency band configured as the downlink, excluding the corresponding uplink FDSB and guard band. Similarly, as PUSCH resource allocation in the reconfiguration symbol, frequency domain resource allocation may be performed based on the activated SBFD bandwidth part. In this case, based on the frequency band configuration of the FDSB in the corresponding reconfiguration symbol, the frequency resource of the PUSCH may be allocated within the uplink FDSB, and the PDSCH frequency resource may be limited to allocation within the downlink frequency band.

For example, additional information for uplink transmission in the reconfiguration symbol may be determined based on PUSCH scheduling information or PDSCH scheduling information of the downlink control information format (DCI format) received from the base station. The uplink transmission by the UE in the reconfiguration symbol may be indicated by the base station's transmission of scheduling control information.

For example, it is assumed that the PUSCH transmission symbol indicated by the DCI for PUSCH scheduling, such as DCI format 0_0, 0_1, 0_2, etc. received by the UE, includes reconfiguration symbols. In other words, the UE may transmit a PUSCH in the reconfiguration symbol based on the PUSCH scheduling information, with priority over the TDD configuration information, when a PUSCH transmission symbol specified by the time domain resource assignment information on a downlink control information format including the PUSCH scheduling information is the reconfiguration symbol. Specifically, the UE may perform PUSCH transmission through the PUSCH transmission resource allocated by DCI regardless of UL or DL configuration information of the corresponding symbol set by the above-described *'tdd-UL-DL-ConfigurationCommon'* or '*tdd-UL-DL-ConfigurationDedicated* or, additionally, UL or DL indication information by DCI format 2_0.

As another example, it is assumed that the HARQ feedback information transmission symbol determined by the PDSCH-to-HARQ_feedback timing indicator included in the DCI for PDSCH scheduling, such as DCI format 1_0, 1_1, 1_2, etc. received by the UE, is a reconfiguration symbol. In other words, the UE may transmit HARQ feedback information in the reconfiguration symbol based on the PUSCH scheduling information, with priority over the TDD configuration information when an HARQ feedback information transmission symbol determined by a PDSCH-to-HARQ_feedback timing indicator of a downlink control information format including the PUSCH scheduling information is the reconfiguration symbol.

Further, according to an embodiment, the additional information for uplink transmission in the reconfiguration symbol may be determined based on the configuration and activation of a bandwidth part or an uplink bandwidth part configured for the reconfiguration symbol. In other words, an uplink transmission operation by the UE in the reconfiguration symbol may be configured or indicated through the configuration and activation of a separate SBFD bandwidth part.

When an SBFD UL BWP is configured, or when an SBFD UL BWP is configured and indicated to be activated for the UE, the uplink transmission operation in the reconfiguration symbol may be configured to be performed. Conversely, when an SBFD DL BWP is configured or when an SBFD DL BWP is configured and indicated to be activated for the UE, the downlink reception operation in the reconfiguration symbol may be configured to be performed. In this case, the SBFD UL BWP or SBFD DL BWP may be configured separately from the existing downlink bandwidth part (DL BWP) or uplink bandwidth part (UL BWP).

Further, activation indication information about the SBFD UL BWP or SBFD DL BWP may be indicated (e.g., provided) through the DCI format for PDSCH or PUSCH scheduling. In this case, the PDSCH scheduling or PUSCH scheduling DCI format may be configured to include an information area for activation indication of a separate SBFD UL BWP or SBFD DL BWP in addition to an activation indication information area for the DL BWP or UL BWP, such as the existing bandwidth part indicator. Alternatively, it may be configured to indicate activation for the SBFD DL BWP or SBFD UL BWP through the existing bandwidth part indicator.

According to an embodiment, the UE may transmit the PUSCH through rate matching or perform puncturing of the PUSCH transmission for a frequency resource outside a frequency domain of the uplink subband when frequency domain resource allocation information about a downlink control information format including the PUSCH scheduling information includes a frequency resource outside the frequency domain of the uplink subband. For example, it is assumed that the frequency resource allocation information for PUSCH transmission includes a frequency resource outside the uplink subband boundary like the frequency resource belonging to the downlink subband or guard band in the reconfiguration symbol. In this case, the UE may map to the frequency resource based on the frequency resources belonging to the uplink subband by applying rate matching or puncturing to the frequency resources outside the corresponding uplink subband when generating a PUSCH signal according to the corresponding PUSCH scheduling information and mapping it to the frequency resource.

According to an embodiment, when resource allocation type 0 is applied to the transmission of the PUSCH, if some of the one or more resource block groups allocated for the transmission of the PUSCH at least partially overlap with the frequency domain of the uplink subband, the UE may transmit the PUSCH only using for physical resource blocks belonging to the frequency domain of the uplink subband within physical resource blocks (PRBs) constituting the resource block group. For example, in the case of an RBG partially overlapping the uplink subband, the UE may perform frequency mapping for the PUSCH using only the frequency resource within the uplink subband boundary among the frequency resources of the corresponding RBG. In other words, frequency mapping may be performed only for the PRB(s) within the uplink subband boundary from the PRBs constituting the corresponding RBG.

In other words, when resource allocation type 0-based frequency domain resource allocation information may be indicated through the DCI format including the PUSCH scheduling information such as DCI format 0_0, 0_1, or 0_2, and the corresponding PUSCH transmission includes the reconfiguration symbol, the UE may determine the available PRB resource for the corresponding PUSCH transmission as only the PRBs belonging to the frequency domain of the uplink subband within the RBGs partially overlapping with the uplink subband, as well as all the PRBs belonging to all the RBGs fully overlapping with the uplink subband among the allocated RBG(s). Accordingly, the UE may perform PUSCH transmission based on resource elements (REs) within the corresponding available PRB resource. In this case, as described above, puncturing or rate matching may be applied to map the PUSCH transmission signal onto the REs of the available PRB resource.

A resource allocation type 0-based case has been described above, but this is only an example, and the disclosure is not limited thereto. The description of the disclosure may be applied similarly to other resource allocation types.

Further, the contents of the disclosure may be similarly applied to base station PDSCH transmission and UE PDSCH reception that include a reconfiguration symbol as long as they do not contradict the technical spirit.

According to the embodiments described above, the uplink transmission may be performed more efficiently in a slot or symbol to which full-duplex communication is applied.

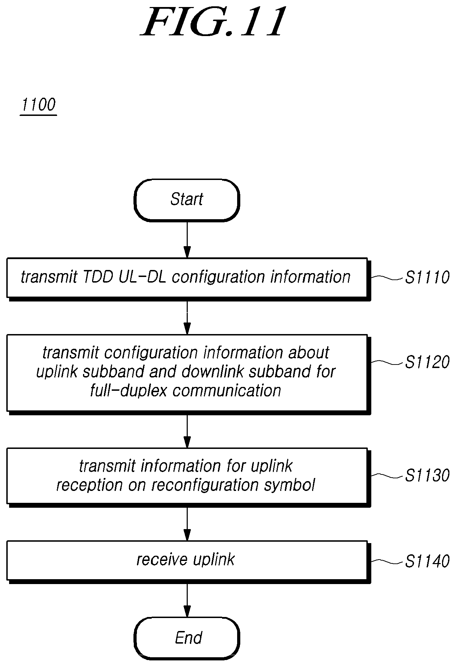

FIG. 11 is a flowchart illustrating a procedure 1100 for a base station to perform uplink reception in a full-duplex communication mode according to an embodiment. The description made in connection with FIG. 10 may be omitted to avoid redundancy, and, in such cases, the omitted content may be applied similarly to the transmission UE as long as it does not contradict the technical spirit of the invention.

Referring to FIG. 11, the base station may transmit time division duplex (TDD) uplink (UL)-downlink (DL) configuration information (S1110).

The base station may transmit TDD configuration information for determining the format of the symbol to the UE. In this case, the TDD configuration information may include i) information about the format of the slot and ii) information for determining the format of the symbol in the slot, and the TDD configuration information may be transmitted through higher layer signaling or L1 signaling.

In other words, the base station may transmit, to the UE, the TDD configuration information for uplink-downlink (UL-DL) slot configuration. In this case, the corresponding slot may be configured on a per-cell basis through higher layer signaling, e.g., cell-specific RRC signaling. In other words, patterns of DL symbols, UL symbols, and flexible symbols within a predetermined period may be configured based on the RRC message *'tdd-UL-DL-ConfigurationCommon'* for the corresponding UL-DL slot configuration.

Further, the base station may further transmit an RRC message *'tdd-UL-DL-ConfigurationDedicated'* through UE-specific RRC signaling. Among the symbols configured based on the above-described RRC message *'tdd-UL-DL-ConfigurationCommon',* only flexible symbols may be reconfigured as UL symbols, DL symbols, or flexible symbols based on the RRC message '*tdd-UL-DL-ConfigurationDedicated''.*

Alternatively, the base station may indicate a dynamic slot format through a UE-group common PDCCH to the UE. In this case, the base station may dynamically indicate the slot format through DCI format 2_0.

Referring back to FIG. 11, the base station may transmit configuration information for uplink subband and downlink subband for full-duplex communication (S1120).

The configuration information about the full-duplex communication mode may include information for transmitting/receiving data in the full-duplex communication mode between the UE and the base station. According to an embodiment, when the base station supports full-duplex communication based on subband non-overlapping, a specific frequency resource in the same symbol within the TDD carrier is used for downlink transmission, and another frequency resource is used for uplink reception. In other words, a subband may be configured as an arbitrary frequency resource to support a transmission direction different from the transmission direction of DL, UL or flexible as defined by the above-described TDD configuration information.

In other words, some frequency resources may be utilized for uplink transmission by the UE in any DL slot or DL symbol or may be utilized as a flexible symbol for downlink/uplink transition. Alternatively, some frequency resources in any UL slot or UL symbol may be configured for downlink transmission by the base station. As such, a UL full-duplex subband (FDSB) in any DL slot/symbol, or a DL FDSB in any UL slot/symbol may be configured.

When an uplink subband is configured within a symbol configured as a downlink symbol, i.e., when the above-described UL FDSB is configured, the corresponding symbol may be referred to as a reconfiguration symbol. The base station may transmit, to the UE, configuration information for either a UL FDSB configured within the downlink symbol or a DL FDSB configured within the uplink symbol.

Referring back to FIG. 11, the base station may transmit (S1130) additional information for uplink reception within the reconfiguration symbol where the uplink subband is configured among symbols whose format has been determined as the downlink symbol based on the TDD UL-DL configuration information, and it may receive (S1140) the uplink within the reconfiguration symbol based on the additional information for uplink reception in the reconfiguration symbol.

According to an embodiment, the base station may transmit, to the UE, information about the bandwidth part for uplink transmission or downlink reception of the UE in the reconfiguration symbol including the uplink subband. In this case, the SBFD bandwidth part may be further subdivided into SBFD DL BWP and SBFD UL BWP.

The SBFD bandwidth part may include PUSCH configuration information and PUCCH resource set configuration information for uplink transmission by the UE in the reconfiguration symbol. Further, the SBFD bandwidth part may include CORESET configuration information and PDSCH configuration information for downlink reception by the UE in the reconfiguration symbol. Alternatively, the SBFD UL BWP may include PUSCH configuration information and PUCCH resource set configuration information for uplink transmission by the UE. Alternatively, the SBFD DL BWP may include PDSCH configuration information and CORESET configuration information for downlink reception by the UE.

However, frequency resources for uplink transmission may be configured to remain limited within the frequency domain of the uplink subband. In other words, the PUCCH resource set configuration information for uplink control information (UCI) transmission/reception within the SBFD bandwidth part may be limited to operations in the uplink frequency domain according to the configuration of the full-duplex communication subband (FDSB).

For example, in the reconfiguration symbol, an uplink FDSB may be configured, and the SBFD bandwidth part may be configured to include the uplink FDSB, a guard band, and a frequency band operating as a downlink. In this case, the PUCCH resource set for the corresponding SBFD bandwidth part may be configured only within the frequency band of the corresponding uplink FDSB, and the CORESET configuration may be limited to the frequency band configured as the downlink, excluding the corresponding uplink FDSB and guard band. Similarly, as PUSCH resource allocation in the reconfiguration symbol, frequency domain resource allocation may be performed based on the activated SBFD bandwidth part. In this case, according to the frequency band configuration of the FDSB in the corresponding reconfiguration symbol, the frequency resource of the PUSCH may be allocated within the uplink FDSB, and the PDSCH frequency resource may be limited to allocation within the downlink frequency band.

For example, additional information for uplink transmission in the reconfiguration symbol may be determined based on PUSCH scheduling information or PDSCH scheduling information of the downlink control information format (DCI format) sent from the base station. The uplink transmission by the UE in the reconfiguration symbol may be indicated by the base station's transmission of scheduling control information.

For example, it is assumed that the PUSCH transmission symbol indicated by the DCI for PUSCH scheduling, such as DCI format 0_0, 0_1, 0_2, etc., includes reconfiguration symbols. In other words, the base station may receive a PUSCH in the reconfiguration symbol based on the PUSCH scheduling information with priority over the TDD configuration information when a PUSCH transmission symbol specified by time domain resource assignment information within a downlink control information format including the PUSCH scheduling information is the reconfiguration symbol.

As another example, it is assumed that the HARQ feedback information transmission symbol determined by the PDSCH-to-HARQ_feedback timing indicator included in the DCI for PDSCH scheduling, such as DCI format 1_0, 1_1, 1_2, etc. received by the UE, is a reconfiguration symbol. In other words, the base station may receive HARQ feedback information in the reconfiguration symbol based on the PUSCH scheduling information with priority over the TDD configuration information when an HARQ feedback information transmission symbol determined by a PDSCH-to-HARQ_feedback timing indicator within a downlink control information format including the PUSCH scheduling information is the reconfiguration symbol.

Further, in an example, the additional information for uplink transmission in the reconfiguration symbol may be determined based on the configuration and activation of a bandwidth part or an uplink bandwidth part configured for the reconfiguration symbol. In other words, an uplink transmission operation by the UE in the reconfiguration symbol may be configured or indicated through the configuration and activation of a separate SBFD bandwidth part.

When an SBFD UL BWP is configured, or when an SBFD UL BWP is configured and indicated to be activated for the UE, the uplink transmission operation in the reconfiguration symbol may be configured to be performed. Conversely, when an SBFD DL BWP is configured or when an SBFD DL BWP is configured and indicated to be activated for the UE, the downlink reception operation in the reconfiguration symbol may be configured to be performed. In this case, the SBFD UL BWP or SBFD DL BWP may be configured separately from the existing downlink bandwidth part (DL BWP) or uplink bandwidth part (UL BWP).

Further, the base station may indicate activation indication information about the SBFD UL BWP or SBFD DL BWP through the DCI format for PDSCH or PUSCH scheduling. In this case, the PDSCH scheduling or PUSCH scheduling DCI format may be configured to include an information area for activation indication of a separate SBFD UL BWP or SBFD DL BWP in addition to an activation indication information area for the DL BWP or UL BWP, such as the existing bandwidth part indicator. Alternatively, it may be configured to indicate activation for the SBFD DL BWP or SBFD UL BWP through the existing bandwidth part indicator.

According to an embodiment, the base station may receive the PUSCH punctured or rate-matched for a frequency resource outside a frequency domain of the uplink subband when frequency domain resource allocation information on a downlink control information format including the PUSCH scheduling information includes a frequency resource outside the frequency domain of the uplink subband.

As an example, when resource allocation type 0 is applied to transmission of the PUSCH, if some of one or more resource block groups allocated for transmission of the PUSCH at least partially overlap with the frequency domain of the uplink subband, the base station may receive the PUSCH only for physical resource blocks belonging to the frequency domain of the uplink subband among physical resource blocks (PRBs) constituting the resource block group. For example, in the case of an RBG partially overlapping with the uplink subband, the UE may perform frequency mapping onto the PUSCH through only the frequency resource within the uplink subband boundary from the frequency resources of the corresponding RBG.

According to the embodiments described above, an uplink reception may be more effectively performed in a slot or symbol to which full-duplex communication is applied.

Hereinafter, each embodiment related to a method for transmitting an uplink in a wireless network will be described below in detail with reference to related drawings.

The disclosure proposes a method for supporting full-duplex communication in a wireless mobile communication system. In particular, the disclosure proposes full-duplex communication between heterogeneous radio access technologies (RATs), as well as full-duplex communication between homogeneous RATs, and proposes an uplink transmission/reception method for supporting the same. The disclosure proposes bandwidth part (BWP) configuration for supporting full-duplex communication in a wireless mobile communication system and a transmission/reception method of uplink/downlink radio signals and wireless channels by a base station and a UE according thereto.

Time division duplex (TDD) is a duplexing method widely used in commercial new radio (NR), i.e., 5G mobile communication systems. In TDD, time-domain radio resources are divided into downlink slots and uplink slots, and downlink slots are usually distributed at a higher ratio than uplink slots based on the distribution ratio of uplink traffic and downlink traffic. However, this limitation of the uplink slot negatively affects coverage and latency. Full-duplex communication may be applied as a technology for addressing such issues.

Specifically, full-duplex communication is a technique where a gNB, i.e., a base station, simultaneously performs DL transmission and UL reception using the same radio resource. The UE may also simultaneously perform DL reception and UL transmission. In other words, both the base station and the UE may support full duplex. However, unlike the base station, which structurally facilitates self-interference cancellation, the UE's, DL reception performance is prone to being affected by self-interference from UL transmission signals. Therefore, it is generally considered that the base station operates in full-duplex communication, while the UE operates in half-duplex communication. Furthermore, a subband non-overlapping full duplex method in which to reduce the influence of self-interference, the base station simultaneously performs DL transmission and UL reception but does os using distinct frequency resources instead of the same resource, may be primarily considered.

As described above, various full-duplex communication application scenarios are being considered depending on the capabilities of the base station and UE, frequency bands, and frequency interference issues with other operators.

The disclosure proposes a method for configuring a BWP when any base station/network supports subband non-overlapping full duplex and accordingly transmitting/receiving radio channels (e.g., PDCCH/PDSCH and PUSCH/PUCCH) and uplink/downlink radio signals (DM-RS, CSI-RS, SRS, and PSS/SSS) of the base station and the UE. However, the description of the disclosure may be substantially and identically applied to other full-duplex application scenarios. For example, the full duplex application scenario may include a full duplex operation in an unpaired spectrum and a full duplex operation in a downlink (DL) frequency band or an uplink (UL) frequency band of a paired spectrum. Further, as described above, the description of the disclosure may be substantially identically applied to a scenario in which subband non-overlapping full duplex or pure full duplex (i.e., DL transmission and UL reception simultaneously in the same frequency resource) is supported only on the base station side, and a half duplex operation is performed in the UE. Further, the description of the disclosure may be substantially and identically applied even in scenarios where not only the base station but also the UE supports subband non-overlapping full duplex or pure full duplex.

According to the BWP configuration defined in the typical system and the radio signal transmission/reception method based on it, an arbitrary base station/network configures a DL BWP for downlink signal transmission and a UL BWP for uplink signal reception for an arbitrary UE. Specifically, an arbitrary UE may configure up to four DL BWPs, including the initial DL BWP, from the base station for downlink signal reception and, similarly, configure up to four UL BWPs, including the initial UL BWP for uplink signal transmission. Each DL BWPs and UL BWPs configuration information includes index information for identifying each BWP as well as frequency allocation information based on the subcarrier spacing (SCS), cyclic prefix (CP), and common resource block (CRB). Furthermore, the DL BWP and UL BWP having the same index configured for an arbitrary UE in an unpaired spectrum (i.e., TDD frequency) are limited to having the same center frequency. The base station activates one DL BWP and one UL BWP among the DL BWPs and UL BWPs configured for the corresponding UE to enable downlink transmission or uplink reception for an arbitrary UE. Specially, the base station allocates a frequency resource (e.g., CORESET for PDCCH transmission or PDSCH transmission resource) for downlink signal transmission in the corresponding DL BWP and allocates a frequency resource (e.g., PUCCH resource set for PUCCH reception or PUSCH transmission resource) for uplink signal reception in the UL BWP.

As such, the frequency resource for an arbitrary UE is allocated based on the aforementioned DL BWP and UL BWP configuration and activation.

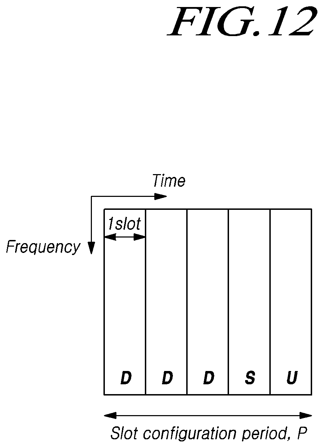

On the other hand, for resource allocation in the time domain within the unpaired spectrum, primarily, configuration or indication for DL or UL slot/symbol is performed on a cell-specific basis. In other words, the uplink-downlink (UL-DL) slot configuration defined in current NR is specified to be performed in units of cells through cell-specific RRC signaling. Specifically, patterns of DL symbols, UL symbols, and flexible symbols of a predetermined period are configured through the RRC message 'tdd-UL-DL-ConfigurationCommon' for the corresponding UL-DL slot configuration. Additionally, through 'tdd-UL-DL-ConfigurationDedicated' which is UE-specific RRC signaling, only flexible symbols configured through the 'tdd-UL-DL-ConfigurationCommon' may be reallocated as UL symbols, DL symbols, or flexible symbols for each UE. Alternatively, a method for indicating a dynamic slot format through a UE-group common PDCCH has also been defined. To that end, NR also supports a slot format indication method in dynamic form through DCI format 2_0. Consequently, according to the above-described slot configuration method, any one symbol may be configured or indicated as one of DL, UL, or Flexible. FIG. 12 illustrates an example of a slot format set as DDDSU through the typical slot configuration. D is a down link slot, which means that all OFDM symbols constituting the corresponding slot are set as DL. U is an uplink slot, which means that all OFDM symbols constituting the corresponding slot are set as UL. S is a special slot, which means a slot including a flexible symbol for DL/UL transition. In general, the special slot may be composed of 12 DL symbols and 2 flexible symbols out of a total of 14 symbols for a normal CP. Alternatively, it may be composed of 10 DL symbols, 2 flexible symbols, and 2 UL symbols. In other words, within any one TDD carrier, one symbol was set or indicated as only one of DL, UL, or flexible.

As such, according to the above-described cell-specific or UE group-common UL/DL slot/symbol configuration, UE-specific DL time period resource allocation for an arbitrary UE is performed in the corresponding DL slot/symbol, and UE-specific UL time section resource allocation for an arbitrary UE is performed within the UL slot/symbol.

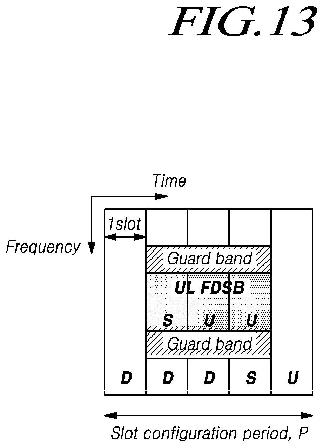

However, when supporting subband non-overlapping-based full duplex in any base station, a specific frequency resource may be used for DL transmission, and another specific frequency resource may be used for UL transmission or UL reception in the same symbol within any unpaired spectrum (i.e., any TDD carrier). In other words, to support full duplex operation as shown in FIG. 13, any frequency resource, i.e., a so-called full duplex subband (FDSB), configured to support a Tx direction different from the transmission direction (Tx direction) configuration (i.e., DL, UL or flexible) configured by the slot configuration information may be configured. In other words, as shown in FIG. 13, it may be defined to allocate some frequency resources in any DL slot or DL symbol as a flexible symbol for UL transmission or a DL/UL transition by the UE. Alternatively, some frequency resources in any UL slot or UL symbol may be defined for DL transmission by the base station. As such, a UL full-duplex subband (FDSB) in any DL slot/symbol, or DL FDSB in any UL slot/symbol may be configured. However, the term 'FDSB' is for convenience of description and the disclosure is not limited thereby, and it may be referred to by other terms as needed.

As such, when an FDSB is configured in any TDD spectrum, it is necessary to clearly define whether any UE is to perform DL reception operation or UL transmission operation in a corresponding symbol in any slot or symbol including the corresponding FDSB. It is also necessary to clearly define how to configure a BWP for DL resource or UL resource allocation according thereto.

Accordingly, the disclosure proposes a Tx/Rx configuration/indication method of a UE and a BWP configuration/indication method for use in any slot or symbol including FDSB (in the disclosure, referred to as a mixed link (ML) slot or symbol, but the scope of the disclosure is not limited to the term).

### ML-specific BWP configuration

The base station may configure a separate ML BWP for frequency resource allocation in an ML symbol or slot including an FDSB in addition to the existing DL/UL BWP. In this case, the ML BWP may be configured in the form of a DL/UL common BWP regardless of whether it is Rx (i.e., DL) or Tx (i.e., UL) on the UE side. In other words, any base station may configure one or more ML BWPs for DL transmission resource allocation or UL reception resource allocation for any UE in the ML symbol or slot including an FDSB. Further, the base station may activate one ML BWP for DL transmission or UL reception resource allocation for the corresponding UE in any ML slot or symbol. Accordingly, any one ML BWP configuration information may include both configuration information for DL reception such as CORESET configuration information and configuration information for UL transmission such as PUCCH resource set configuration information. However, the CORESET configuration information for PDCCH transmission/reception and PUCCH resource set configuration information for uplink control information (UCI) transmission/reception in the corresponding ML BWP may be limited to being applied in the DL frequency domain and UL frequency domain, respectively, according to the FDSB configuration. For example, as shown in FIG. 13, in any DL slot/symbol, a UL FDSB is configured, and an ML BWP for any UE may be configured to include the frequency band operating as DL according to the existing configuration, and the guard band. In this case, the PUCCH resource set for the corresponding ML BWP may be configured only within the frequency band of the corresponding UL FDSB, and the CORESET configuration may be limited to being applied only within the frequency band configured as the existing DL except for the corresponding UL FDSB and guard band. Similarly, as PDSCH or PUSCH resource allocation in the ML symbol, frequency domain resource allocation may be performed based on the activated ML BWP. In this case, according to the frequency band configuration of the FDSB in the corresponding ML slot or symbol, the frequency resource of the PUSCH may be allocated within the UL FDSB, and the PDSCH frequency resource may be limited to allocation within the DL frequency band. If any PUSCH frequency resource allocation includes a frequency resource other than UL FDSB, the frequency resource other than UL FDSB is punctured or rate-matched. Likewise, when any PDSCH frequency resource allocation includes a frequency resource (i.e., the above-described guard band or UL FDSB) other than the DL frequency band, the corresponding frequency resource is defined to be punctured or rate-matched.

As another example for separately configuring an ML-specific BWP, ML_{DL} BWP for DL transmission and ML_{UL} BWP for UL transmission in the corresponding ML symbol/slot may be separately configured. In this case, ML_{DL} BWP may be configured in the DL frequency band of the entire frequency band in the ML symbol, and ML_{UL} BWP may be configured in the UL frequency band in the entire frequency band in the ML symbol. For example, as shown in FIG. 13, when UL FDSB is configured in the symbol/slot configured as DL by legacy slot configuration, ML_{DL} BWP and ML_{UL} BWP in the corresponding ML symbol may be configured. In this case, the corresponding ML_{DL} BWP may be configured in the frequency band configured as DL according to the existing slot configuration except for the UL FDSB and the guard band, and ML_{UL} BWP may be configured in the UL FDSB. As such, also for the case where ML_{DL} BWP and ML_{UL} BWP are separately configured, corresponding ML_{DL} BWP configuration information may include CORESET configuration information for PDCCH reception, and ML_{UL} BWP may include PUCCH resource set configuration information.

As another method for separately configuring an ML-specific BWP, only BWP configuration for reverse transmission direction (reverse Tx direction) in the corresponding FDSB may be applied. In other words, when UL FDSB is configured in the symbol configured as DL by the legacy slot configuration, only ML_{UL} BWP for UL transmission in the corresponding UL FDSB may be additionally configured in addition to the existing DL BWP and UL BWP for any UE. Alternatively, when DL FDSB is configured in the symbol configured as UL by the legacy slot configuration, only ML_{DL} BWP for DL reception in the corresponding DL FDSB may be additionally configured in addition to the existing DL BWP and UL BWP for any UE. In this case, resource allocation for Tx direction according to the legacy slot configuration in the ML symbol may be performed based on the activated legacy BWP configuration, and reverse Tx direction-based resource allocation through FDSB in the corresponding ML symbol may be performed based on the corresponding ML-specific BWP. For example, when any UL FDSB configuration is made in the DL symbol according to the legacy slot configuration as described above, resource allocation for DL reception which is the Tx direction according to the legacy slot configuration in the ML slot including the corresponding UL FDSB for any UE (e.g., PDSCH resource allocation or CORESET resource allocation for PDCCH monitoring) may be performed based on the DL BWP configuration activated in the corresponding UE according to the existing DL BWP configuration information. On the other hand, a separate ML_{UL} BWP may be configured and activated for UL transmission which is reverse Tx direction through UL FDSB in the corresponding ML symbol so that PUSCH or PUCCH transmission resource through the UL FDSB of the corresponding ML symbol is allocated based on the activated ML_{UL} BWP. Even in this case, the corresponding ML_{DL} BWP configuration information may include CORESET configuration information for PDCCH reception, and the ML_{UL} BWP may include PUCCH resource set configuration information.

In this case, in the ML symbol, any UE may dynamically indicate DL or UL transmission/reception. For example, in the ML symbol, the Tx direction of the UE in the corresponding ML symbol may be determined through DL or UL transmission resource allocation through the DCI. In other words, any UE supports both PDSCH/PDCCH reception and PUSCH/PUCCH transmission according to an indication of the base station in the ML symbol. Alternatively, the Tx direction in the corresponding ML symbol may be derived according to whether the ML-specific BWP is configured. For example, when ML-specific BWP configuration is not made for any UE, the UE follows the DL/UL configuration according to the legacy slot configuration in the ML symbol. However, when radio signal transmission/reception is requested through a Tx direction, i.e., FDSB, different from the legacy slot configuration in all or some ML symbols, the base station may configure and activate one or more ML-specific BWPs according to the above-described schemes.

As such, when an ML BWP configuration is made for DL/UL transmission/reception in the ML slot or ML symbol where FDSB configuration is applied, the payload size of the DCI format including PDSCH or PUSCH scheduling information in the corresponding ML slot/symbol may change depending on the size of the corresponding ML BWP or separately configured ML_{DL} BWP and ML_{UL} BWP (i.e., the number of PRBs). Accordingly, size alignment through padding or truncation between DCI formats for PUSCH scheduling and DCI format for PDSCH scheduling may achieve corresponding DCI size alignment including the size of ML BWP or ML_{DL} BWP and ML_{UL} BWP as well as the size of the corresponding DL BWP and UL BWP. In other words, when performing DCI size alignment between DCI format 0_0 and DCI format 1_0, DCI size alignment between DCI format 0_1 and DCI format 1_1, and DCI size alignment between DCI format 0_2 and DCI format 1_2, size alignment between DCI formats according to ML_{DL} BWP and ML_{UL} BWP or activated ML BWP, as well as the size of activated DL BWP and UL BWP is performed.

Additionally, when the corresponding ML-specific BWP configuration is made and includes BWP indicator information area of any PDSCH or PUSCH scheduling DCI format, when the corresponding BWP indicator is configured by the base station and interpreted by the UE, if PUSCH resource allocation by the PUSCH scheduling DCI format is performed in the ML symbol, the corresponding BWP indicator may mean the ML BWP or ML_{UL} BWP ID and, when PUSCH resource allocation is performed in the legacy UL symbol, mean the legacy UL BWP ID. Similarly, when PDSCH resource allocation by any PDSCH scheduling DCI format is performed in the ML symbol, it may mean the ID of the ML BWP or ML_{DL} BWP and, when PDSCH resource allocation in the legacy DL symbol is performed, it may mean the legacy DL BWP ID. Alternatively, each DL/UL DCI format may include an additional information area for indicating whether the corresponding BWP indicator is the legacy DL/UL BWP indicator or ML-specific BWP indicator information.

Further, for the unpaired spectrum, it may be defined to establish linkage between ML_{DL} BWP and ML_{UL} BWP or DL BWP and UL BWP and ML BWP of the same index. In other words, it may be defined that any UE does not expect that the center frequency between ML_{DL} BWP and ML_{UL} BWP or DL BWP and UL BWP and ML BWP of the same index is set to differ. Alternatively, it may be defined that the ML-specific BWP is configured and activated independently from the linkage between the legacy DL BWP and UL BWP.

Hereinafter, a method of a UE for configuring and indicating transmission/reception direction in a subband full duplex (SBFD) slot or SBFD symbol (i.e., the above-described ML slot or ML symbol) where UL subband (i.e., the UL FDSB) is configured according to the above-described method and a method of a UE for transmitting PUSCH and PUCCH, and a method of a base station for receiving a PUSCH and PUCCH will be described in detail. Here, the term 'SBFD' serves as an example, and the disclosure is not limited thereto. The symbol may alternatively be referred to by other terms, such as a 'reconfiguration symbol.'

The base station may configure an SBFD BWP for either uplink transmission or downlink reception by the UE in an SBFD symbol or SBFD slot including a UL subband for any UE. The SBFD BWP may be further subdivided into SBFD DL BWP and SBFD UL BWP. The SBFD BWP configured for any UE may include i) PUSCH configuration information and ii) PUCCH resource set configuration information for uplink transmission by the UE in the SBFD symbol/slot. Further, the SBFD BWP configured for any UE may include i) CORESET configuration information and ii) PDSCH configuration information for downlink reception by the corresponding UE in the SBFD symbol/slot. Alternatively, the SBFD UL BWP configured for any UE may include i) PUSCH configuration information and ii) PUCCH resource set configuration information for uplink transmission by the UE. Alternatively, the SBFD DL BWP configured for any UE may include i) PDSCH configuration information and ii) CORESET configuration information for downlink reception by the UE.

Whether a UE performs uplink transmission or downlink reception in the SBFD symbol or SBFD slot may be indicated by transmission of scheduling control information of the base station. As an example, when the PUSCH transmission slot or symbol indicated by the time domain resource assignment (TDRA) included in the DCI format (e.g., DCI format 0_0, 0_1, or 0_2) for PUSCH scheduling transmitted for any UE includes an SBFD slot or SBFD symbol, the corresponding UE performs PUSCH transmission through the PUSCH transmission resource allocated by the corresponding DCI format regardless of the legacy slot configuration in the corresponding SBFD slot or SBFD symbol. In other words, the UE may perform PUSCH transmission through the PUSCH transmission resource allocated by the DCI format regardless of UL or DL configuration information of the corresponding slot or symbol by the above-described *'tdd-UL-DL-ConfigurationCommon'* or '*tdd-UL-DL-ConfigurationDedicated* or, additionally, UL or DL indication information by DCI format 2_0. As another example, when the UCI transmission slot or symbol indicated by the PDSCH-to-HARQ_feedback timing indicator included in the DCI format (e.g., DCI format 1_0, 1_1, or 1_2) for PDSCH scheduling transmitted for any UE includes an SBFD slot or SBFD symbol, the corresponding UE performs UCI transmission (e.g., PUCCH transmission or PUSCH transmission) regardless of configuration by the legacy slot configuration in the indicated SBFD slot or SBFD symbol.

Alternatively, as described above, whether the UE performs UL transmission or DL reception operation may be configured or indicated in any SBFD slot or SBFD symbol through separate SBFD BWP configuration and activation. As an example, when an SBFD UL BWP is configured, or when SBFD UL BWP is configured and indicated to be activated for any UE, the uplink transmission operation in the SBFD symbol or SBFD slot may be performed. Conversely, when an SBFD DL BWP is configured or when SBFD DL BWP is configured and indicated to be activated for the UE, the downlink reception operation in the SBFD symbol or SBFD slot may be performed. In this case, an SBFD UL BWP or SBFD DL BWP is configured separately from the legacy DL BWP or UL BWP, and activation indication information about the corresponding SBFD UL BWP or SBFD DL BWP is indicated through the DCI format for PDSCH or PUSCH scheduling. In this case, PDSCH scheduling or PUSCH scheduling DCI format may include an information area for separate SBFD UL BWP or SBFD DL BWP activation indication in addition to the activation indication information area (i.e., legacy bandwidth part indicator) for the legacy DL BWP or UL BWP or defined to indicate activation of the SBFD DL BWP or SBFD UL BWP through the legacy bandwidth part indicator.

Hereinafter, a method for determining frequency resource for PUSCH transmission by a UE when frequency resource additional information for PUSCH transmission of the UE in an SBFD symbol or SBFD slot includes a frequency resource outside a UL subband boundary will be described in detail.

When frequency resource allocation information for PUSCH transmission according to PUSCH scheduling information for any UE in an SBFD symbol or SBFD slot includes a frequency resource outside the UL subband boundary (i.e., when including some of the frequency resources belonging to the above-described guard band or DL subband), the UE may generate a PUSCH transmission signal and map the frequency resource based on frequency resources belonging to the UL subband through rate matching or puncturing on the frequency resources other than the corresponding UL subband in generating a PUSCH signal according to the corresponding PUSCH scheduling information and mapping it onto the frequency resource.

As an example, PUSCH transmission is performed through only RBG(s) fully or partially overlapping, on the frequency axis, the UL subband in the resource block group (RBG) allocated for PUSCH transmission of any UE in the SBFD symbol according to resource allocation type 0-based PUSCH frequency resource allocation. However, in the case of any RBG partially overlapping the UL subband, i.e., any RBG including all of the frequency resources outside the UL subband boundary and the frequency resource in the UL subband boundary, the UE may perform frequency mapping of the corresponding PUSCH transmission through, the frequency resource in the UL subband boundary among the frequency resources of the corresponding RBG, only the PRB(s) in the UL subband boundary among the PRBs constituting the corresponding RBG. In other words, when resource allocation type 0-based frequency domain resource allocation information may be indicated through the DCI format including the PUSCH scheduling information such as DCI format 0_0, 0_1, 0_2, and the corresponding PUSCH transmission includes the SBFD symbol, the UE may determine, as the available PRB resource for the corresponding PUSCH transmission, only the PRBs belonging to the frequency domain of the UL subband among the RBG(s) partially overlapping the UL subband and all the PRBs belonging to all the RBG(s) fully overlapping the UL subband among the allocated RBG(s). Further, the UE may accordingly perform PUSCH transmission based on resource elements (REs) in the corresponding available PRB resource. In this case, as described above, as a method for mapping a PUSCH transmission signal through the REs of the available PRB resource, the above-described puncturing or rate matching method may be applied.

Although a puncturing-based method or a rate matching-based method for mapping a PUSCH transmission signal on frequency resources outside a UL subband boundary based on resource type 0 has been described above, the same method may apply to other resource allocation types as well.

Further, although the above description has been made in terms of PUSCH transmission of a UE, the description may also apply to reception by a base station. Further, the same description may apply to PDSCH transmission by a base station and PDSCH reception by a UE including SBFD symbols.

Further, although the disclosure is described based on a 5G NR system, all cases where the technical spirit of the disclosure is applied may be included in the scope of the present invention regardless of specific wireless communication techniques.

According to the embodiments described above, an uplink transmission may be performed more efficiently in a slot or symbol to which full-duplex communication is applied.

Further, the disclosure proposes a frequency sharing technology based on full-duplex communication between different heterogeneous RATs. For example, it may be a frequency sharing method based on full-duplex communication between LTE and 5G NR. In this case, the 5G NR base station may configure a UL slot(s) and perform UL reception for the radio resource configured through a DL subframe for DL transmission by the LTE base station in any frequency band. In contrast, the 5G NR base station may configure a DL slot(s) and perform DL transmission for a radio resource configured through an UL subframe for UL reception by the LTE base station. Specifically, in any paired spectrum, the LTE DL band may be used as a UL band of 5G NR, and the UL band of LTE may be used as a DL band of 5G NR. For example, for 5G migration in any LTE FDD frequency band, the DL band of the corresponding LTE FDD frequency band may be used by 5G NR for UL reception, and the UL band may be used by 5G NR for DL transmission. Conversely, in any 5G TDD frequency band, the LTE base station may configure the 5G DL slot(s) through the UL subframe(s) to be used for UL reception, and the LTE base station may configure the 5G UL slot(s) through the DL subframe(s) to be used for DL transmission.

Such spectrum sharing technology based on full-duplex communication between heterogeneous RATs may be expanded to 6G, 7G, and beyond, to be defined in the future. In other words, any 5G frequency band may be defined to be shared and used based on full-duplex communication in 6G. In this case, in the 5G frequency band, the DL section may be used as the UL section of 6G, and the 5G UL section may be used as the 6G DL section.

As such, there is an increasing need for spectrum sharing technology in the migration process of a mobile communication system, but the spectrum sharing technology basically focuses on a method of using radio resources between different RATs in an orthogonal manner for the same transmission direction. However, in the disclosure, the same radio resources may be used in the form of a pair of different transmission directions (i.e., DL-UL pair) based on full-duplex communication between heterogeneous RATs, thereby enhancing frequency efficiency.

Additionally, the disclosure proposes a method for resolving cross link interference (CLI) that may occur when frequency sharing based on full-duplex communication between the heterogeneous RATs is performed.

CLI, which is one of the biggest problems of full-duplex communication, refers to interference caused by an UL signal of an adjacent UE using the same radio resource when receiving a DL signal of a base station from an arbitrary UE. Accordingly, when the above-described full-duplex communication between heterogeneous RATs (e.g., RAT A and RAT B) is applied, the UL signal transmission of the UE belonging to RAT B may act as interference with DL signal reception of the UE belonging to RAT A. Conversely, when the UE belonging to RAT B receives the DL signal, the UL signal transmission of the UE of RAT B may act as interference.

Transmission of a UE-specific radio channel/signal may be solved through scheduling between UEs. However, for cell-specific radio channel/signal transmission, a method for more actively solving CLI may be required. For example, it is necessary to develop a technology for actively avoiding CLI for cell-specific reference signals (RSs) such as LTE CRS and system information such as the SIB transmitted through the PBCH and PDSCH or synchronization signals for UE access such as PSS/SSS. Further, critical DL transmission in the resource configured through the physical random access channel (PRACH) should be avoided, as opposed to grant-based UL transmission.

To that end, the disclosure proposes a UL transmission method for minimizing CLI in the UE of RAT B where UL transmission is performed based on full-duplex communication in the radio resource where critical DL transmission is performed in arbitrary RAT A, i.e., UL transmission is performed through the same resource. However, as described above, specifically, the corresponding full-duplex communication scheme may also include sub-band non-overlapping full-duplex. Hereinafter, the corresponding technology will be described based on an example of applying full-duplex communication between LTE and 5G NR. However, this is merely an example, and it is apparent that the same technology may also be applied between LTE and 6G, or between 5G and 6G.

When NR UL resources overlapping DL of LTE are allocated, PSS/SSS and PBCH transmission resources of LTE and LTE CRS transmission resources may be avoided. In other words, upon NR UL transmission, the base station may configure or instruct the UE to perform puncturing or rate matching on specific REs for UL transmission such as PUSCH, PUCCH, and SRS. Accordingly, the UE performs puncturing or rate matching on the corresponding resource upon UL transmission.

To that end, the NR base station may configure a rate match pattern or a puncturing pattern for the LTE CRS when the UE transmits the UL. The LTE CRS rate match pattern information for corresponding NR UL may include carrier frequency information, bandwidth information, multimedia broadcast single frequency network (MBSFN) subframe configuration information, CRS port number information, v-shift information, and similar details about the LTE DL. The LTE CRS rate match pattern information may include CRS rate match pattern information about one or more LTE carriers. Based on this, the UE may perform puncturing or rate matching on the corresponding LTE CRS transmission REs in the RE mapping process in the radio resource allocated for corresponding PUSCH or PUCCH transmission upon UL transmission, i.e., upon any PUSCH transmission or PUCCH transmission. Further, the UE may also perform puncturing or rate matching on LTE PSS/SSS and PBCH transmission resources according to the corresponding information.

However, the LTE CRS rate matching information for the UL may additionally configure rate matching for adj acent REs of the corresponding REs in addition to CRS REs or REs where PSS/SSS and PBCH transmission is performed. In other words, since CLI is interference of the uplink transmission of an adj acent UE with downlink reception of any UE, a difference may occur between the DL signal transmission time of the base station and the UL transmission time of the adjacent UE due to, for example, the influence of the difference between the DL frame time of the base station and the UL frame time of the adjacent UE which is the interference source and the propagation delay. As a result, differences in symbol boundary may occur.

Accordingly, a guard resource may be defined around the DL transmission resource requiring CLI avoidance so that rate matching or puncturing is performed on the corresponding guard resource as well. In other words, upon CRS rate match pattern configuration, REs adjacent to the CRS RE may be defined as a guard resource for CLI avoidance so that rate matching is also performed on the corresponding guard resource. The corresponding guard resource may be adjacent REs in the time domain, i.e., REs of the same subcarrier in the previous or subsequent symbol of the LTE CRS transmission symbol.

Alternatively, it may be adjacent REs in the frequency domain, i.e., REs corresponding to the subcarrier above or below the same symbol as the REs where LTE CRS transmission is performed. The corresponding guard resource may be a single RE adjacent to the CRS transmission RE, or may be N consecutive REs. Further, the guard resource for rate matching may be defined to define a single pattern, and when rate matching for the LTE CRS is configured, rate matching for the guard resource pattern may be performed together without separate signaling. Alternatively, the guard resource for rate matching may be defined to perform signaling along with LTE CRS rate matching configuration as to whether additional rate matching is performed on the corresponding single guard resource pattern. Alternatively, one or more guard resource patterns may be defined, and the base station may transmit guard resource pattern configuration information to be applied to rate matching to the UE.

The same content of the above-described UL rate matching may be applied even when applying full-duplex communication between homogeneous systems. For example, when an arbitrary 5G NR base station/cell supports full-duplex communication, rate matching may be configured for NR SSB when an arbitrary UE transmits UL. Further, rate matching may be configured for guard resources around the SSB transmission resource. In this case, when the base station configures the PUSCH or PUCCH transmission of the UE, the rate matching information for the SSB may be configured. The corresponding SSB rate matching configuration information may include, e.g., the index value of the SSB where actual SSB transmission is performed among the SSB candidates in the half frame and *ssb-periodicityServingCell* which is half frame period-related configuration information. In this case, for indication of the index value of the SSB where actual SSB transmission is performed among the SSB candidates of the half frame, it may be indicated in the form of a bitmap for each SSB index of the SSB candidates in the half frame, or the SSB index value may be directly indicated, or any pattern may be defined to indicate the corresponding pattern value.

In addition to the SSB transmission, rate matching for UL transmission may be configured for CSI-RS transmission resources or other DL reference signal transmission resources such as PRS, PT-RS, and RIM-RS. In this case, identification information about the type of the DL reference signal requiring the corresponding rate matching, resource allocation information about which the corresponding reference signal is transmitted, or the like may be transmitted through the rate matching configuration information for corresponding UL transmission.

Further, when the rate matching for the NR SSB or the DL reference signal of the NR is configured, the rate matching for the guard resource may be configured together with the corresponding transmission resource. As described above, the guard resource may be composed of REs adjacent to the corresponding SSB or DL reference signal transmission resource. In other words, the guard resource may be an adjacent resource (previous symbol or subsequent symbol) in the time domain, i.e., a guard time form, and an adjacent resource (upper or lower subcarrier) in the frequency domain, i.e., a guard subcarrier form. A single pattern may be defined for the guard resource so that rate matching may be configured implicitly or explicitly. One or more patterns of the guard resource may be defined to include guard resource rate matching pattern configuration information when configuring rate matching.

The UL rate matching configuration information described above may be configured by the base station through RRC signaling or may be indicated through L1/L2 control signaling. In this case, the radio resource configuration information requiring the corresponding rate matching may be defined to reuse the existing configuration information. For example, the rate matching configuration for the LTE CRS may be defined to apply the previously defined RateMatchPatternLTE-CRS configuration information of FIGS. 12 and 13 to the UL rate matching. In this case, the corresponding information may additionally include information area and guard resource configuration information for configuring whether to apply UL rate matching, as described above. Alternatively, a separate RRC message for UL rate matching may be defined, and rate matching for LTE PSS/SSS and PBCH or LTE CRS, or NR SSB or NR DL RS may be configured through the corresponding message.

Further, the rate matching for the corresponding UL may be independently configured for each of the PUSCH or the PUCCH. Alternatively, the UL rate matching may be configured only for the PUSCH. Alternatively, default may be applied to PUSCH, and the base station may configure whether to apply rate matching to PUCCH.

According to the embodiments described above, full-duplex communication may be supported for the UE to efficiently perform, without interference, uplink transmission in the full-duplex communication mode in the frequency band allocated as downlink by another RAT base station.

Hereinafter, configurations of a UE and a base station, which may perform all or some of the embodiments described above in connection with FIGS. 1 to 13, will be described below with reference to the accompanying drawings. The above-described description may be omitted to avoid redundant description and, in such case, the omitted content may be applied similarly to the following description as long as it does not contradict the technical spirit of the invention.

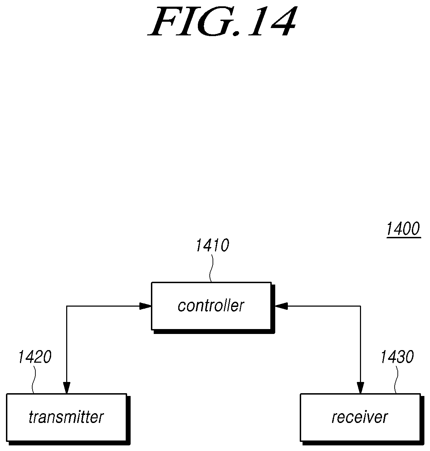

FIG. 14 is a block diagram illustrating a UE 1400 according to an embodiment.

Referring to FIG. 14, a UE 1400 according to an embodiment includes a transmitter 1420, a receiver 1430, and a controller 1410 controlling operations of the transmitter and the receiver.

The controller 1410 controls the overall operation of the UE 1400 for performing a method of efficiently transmitting an uplink in a slot or symbol where full-duplex communication is applied, according to an embodiment.

The controller 1410 may receive time division duplex (TDD) configuration information from a base station and determine a format of a symbol as any one of a downlink symbol, an uplink symbol, and a flexible symbol based on the TDD configuration information. The TDD configuration information may include i) information about the format of the slot and ii) configuration information for determining the format of the symbol in the slot, and the TDD configuration information may be received through higher layer signaling or L1 signaling.

The controller 1410 may determine each symbol as one of a DL symbol, a UL symbol or a flexible symbol, in relation to the time resource to be applied to the TDD scheme. In other words, based on the cell-specific or UE group-common UL/DL slot/symbol configuration, UE-specific downlink time domain resource assignment for an arbitrary UE is performed in the corresponding DL slot/symbol, and UE-specific uplink time domain resource assignment for an arbitrary UE is performed in the UL slot/symbol.

The controller 1410 may receive configuration information about an uplink subband and a downlink subband for full-duplex communication. The configuration information about the full-duplex communication mode may include information for transmitting/receiving data in the full-duplex communication mode between the UE and the base station.

According to an embodiment, when the base station supports full-duplex communication based on subband non-overlapping, a specific frequency resource in the same symbol within the TDD carrier is used for downlink transmission, and another frequency resource is used for uplink reception. In other words, a subband may be configured as an arbitrary frequency resource to support a transmission direction different from the transmission direction of DL, UL or flexible as defined by the above-described TDD configuration information.

When an uplink subband is configured using a downlink symbol, i.e., when the above-described UL FDSB is configured, the corresponding symbol may be referred to as a reconfiguration symbol. The controller 1410 may receive configuration information for a UL FDSB configured in the downlink symbol or a DL FDSB configured in the uplink symbol. In this case, the controller 1410 may determine the corresponding symbol as the reconfiguration symbol.

The controller 1410 may receive additional information for uplink transmission within a reconfiguration symbol in which the uplink subband is configured among symbols whose format has been determined as the downlink symbol. Furthermore, the controller 1410 may transmit the uplink within the reconfiguration symbol based on the additional information for uplink transmission in the reconfiguration symbol.

According to an embodiment, the controller 1410 may receive information about the bandwidth part for uplink transmission or downlink reception by the UE within the reconfiguration symbol that includes the uplink subband configured by the base station.

The SBFD bandwidth part may include PUSCH configuration information and PUCCH resource set configuration information for uplink transmission by the UE within the reconfiguration symbol. Further, the SBFD bandwidth part may include CORESET configuration information and PDSCH configuration information for downlink reception by the UE in the reconfiguration symbol. Alternatively, the SBFD UL BWP may include PUSCH configuration information and PUCCH resource set configuration information for uplink transmission by the UE. Alternatively, the SBFD DL BWP may include PDSCH configuration information and CORESET configuration information for downlink reception by the UE.

However, frequency resources for uplink transmission may be configured to remain limited within the frequency domain of the uplink subband. In other words, the PUCCH resource set configuration information for uplink control information (UCI) transmission/reception within the SBFD bandwidth part may be limited to operations in the uplink frequency domain according to the configuration of the full-duplex communication subband (FDSB). In this case, according to the frequency band configuration of the FDSB in the corresponding reconfiguration symbol, the frequency resource of the PUSCH may be allocated within the uplink FDSB, and the PDSCH frequency resource may be limited to allocation within the downlink frequency band.

For example, additional information for uplink transmission in the reconfiguration symbol may be determined based on PUSCH scheduling information or PDSCH scheduling information of the downlink control information format (DCI format) received from the base station. The uplink transmission by the UE in the reconfiguration symbol may be indicated by the base station's transmission of scheduling control information.

For example, it is assumed that the PUSCH transmission symbol indicated by the DCI for PUSCH scheduling, such as DCI format 0_0, 0_1, 0_2, etc. received by the receiver 1430, includes reconfiguration symbols. In other words, the controller 1410 may transmit a PUSCH in the reconfiguration symbol based on the PUSCH scheduling information with priority over the TDD configuration information when a PUSCH transmission symbol specified by time domain resource assignment information within a downlink control information format containing the PUSCH scheduling information is the reconfiguration symbol.

As another example, it is assumed that the HARQ feedback information transmission symbol determined by the PDSCH-to-HARQ_feedback timing indicator included in the DCI for PDSCH scheduling, such as DCI format 1_0, 1_1, 1_2, etc. received by the receiver 1430, is a reconfiguration symbol. vIn other words, the controller 1410 may transmit HARQ feedback information in the reconfiguration symbol based on the PUSCH scheduling information with priority over the TDD configuration information when an HARQ feedback information transmission symbol determined by a PDSCH-to-HARQ_feedback timing indicator within a downlink control information format containing the PUSCH scheduling information is the reconfiguration symbol.

Further, according to an example, the additional information for uplink transmission in the reconfiguration symbol may be determined based on the configuration and activation of a bandwidth part or uplink bandwidth part configured for the reconfiguration symbol.

When an SBFD UL BWP is configured, or when SBFD UL BWP is configured and indicated to be activated for the UE, the uplink transmission operation in the reconfiguration symbol may be configured to be performed. Conversely, when an SBFD DL BWP is configured or when SBFD DL BWP is configured and indicated to be activated for the UE, the downlink reception operation in the reconfiguration symbol may be configured to be performed. In this case, the SBFD UL BWP or SBFD DL BWP may be configured separately from the existing downlink bandwidth part (DL BWP) or uplink bandwidth part (UL BWP).

Further, activation indication information about the SBFD UL BWP or SBFD DL BWP may be indicated through the DCI format for PDSCH or PUSCH scheduling. In this case, the PDSCH scheduling or PUSCH scheduling DCI format may be configured to include an information area for activation indication of a separate SBFD UL BWP or SBFD DL BWP in addition to an activation indication information area for the DL BWP or UL BWP, such as the existing bandwidth part indicator. Alternatively, it may be configured to indicate activation for the SBFD DL BWP or SBFD UL BWP through the existing bandwidth part indicator.

According to an embodiment, the controller 1410 may transmit the PUSCH through rate matching or puncture for the PUSCH transmission for a frequency resource outside a frequency domain of the uplink subband when frequency domain resource allocation information about a downlink control information format including the PUSCH scheduling information includes a frequency resource outside the frequency domain of the uplink subband.

As an example, when resource allocation type 0 is applied to transmission of the PUSCH, if some of one or more resource block groups allocated for transmission of the PUSCH at least partially overlap with the frequency domain of the uplink subband, the controller 1410 may transmit the PUSCH only for physical resource blocks belonging to the frequency domain of the uplink subband among physical resource blocks (PRBs) constituting the resource block group. For example, in the case of an RBG partially overlapping with the uplink subband, the UE may perform frequency mapping onto the PUSCH through only the frequency resource in the uplink subband boundary among the frequency resources of the corresponding RBG. In other words, frequency mapping may be performed only on the PRB(s) in the uplink subband boundary among the PRBs constituting the corresponding RBG.

According to the embodiments described above, an uplink transmission may be performed more efficiently in a slot or symbol to which full-duplex communication is applied.

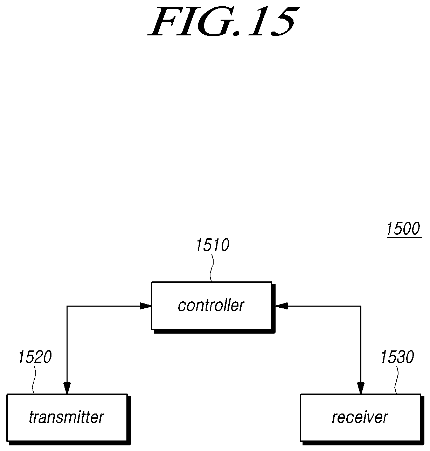

FIG. 15 is a block diagram illustrating a base station 1500 according to an embodiment.

Referring to FIG. 15, a base station 1500 according to an embodiment includes a transmitter 1520, a receiver 1530, and a controller 1510 controlling operations of the transmitter and the receiver.

The controller 1510 controls the overall operation of the base station 1500 for performing a method of efficiently receiving an uplink in a slot or symbol where full-duplex communication is applied according to an embodiment. The transmitter 1520 transmits downlink control information and data or messages to the UE via a corresponding channel. The receiver 1530 receives downlink control information and data or messages from the base station via a corresponding channel.

The controller 1510 may transmit time division duplex (TDD) uplink (UL)-downlink (DL) configuration information. The controller 1510 may transmit TDD configuration information for determining the format of the symbol to the UE. In this case, the TDD configuration information may include i) information about the format of the slot and ii) information for determining the format of the symbol in the slot, and the TDD configuration information may be transmitted through higher layer signaling or L1 signaling.

The controller 1510 may transmit configuration information about an uplink subband and a downlink subband for full-duplex communication. The configuration information about the full-duplex communication mode may include information for transmitting/receiving data in the full-duplex communication mode between the UE and the base station.

According to an embodiment, when the base station supports full-duplex communication based on subband non-overlapping, a specific frequency resource in the same symbol within the TDD carrier is used for downlink transmission, and another frequency resource is used for uplink reception. In other words, a subband may be configured as an arbitrary frequency resource to support a transmission direction different from the transmission direction of DL, UL or flexible as defined by the above-described TDD configuration information.

When an uplink subband is configured within a symbol configured as a downlink symbol, i.e., when the above-described UL FDSB is configured, the corresponding symbol may be referred to as a reconfiguration symbol. The controller 1510 may transmit, to the UE, configuration information for either a UL FDSB configured within the downlink symbol or a DL FDSB configured within the uplink symbol.

The controller 1510 may transmit additional information for uplink reception within a reconfiguration symbol in which the uplink subband is configured among symbols whose format has been determined as the downlink symbol based on the TDD configuration information. Furthermore, the controller 1510 may receive the uplink within the reconfiguration symbol based on the additional information for the uplink reception in the reconfiguration symbol.

According to an embodiment, the controller 1510 may transmit, to the UE, information about the bandwidth part for uplink transmission or downlink reception of the UE in the reconfiguration symbol including the uplink subband.

The SBFD bandwidth part may include PUSCH configuration information and PUCCH resource set configuration information for uplink transmission by the UE within the reconfiguration symbol. Further, the SBFD bandwidth part may include CORESET configuration information and PDSCH configuration information for downlink reception by the UE within the reconfiguration symbol. Alternatively, the SBFD UL BWP may include PUSCH configuration information and PUCCH resource set configuration information for uplink transmission by the UE. Alternatively, the SBFD DL BWP may include PDSCH configuration information and CORESET configuration information for downlink reception by the UE.

However, frequency resources for uplink transmission may be configured to remain limited within the frequency domain of the uplink subband. In other words, the PUCCH resource set configuration information for uplink control information (UCI) transmission/reception within the SBFD bandwidth part may be limited to operations in the uplink frequency domain according to the configuration of the full-duplex communication subband (FDSB).

For example, additional information for uplink transmission in the reconfiguration symbol may be determined based on PUSCH scheduling information or PDSCH scheduling information of the downlink control information format (DCI format) transmitted by the base station. The uplink transmission by the UE in the reconfiguration symbol may be indicated by the base station's transmission of scheduling control information.

For example, it is assumed that the PUSCH transmission symbol indicated by the DCI for PUSCH scheduling, such as DCI format 0_0, 0_1, 0_2, etc., includes reconfiguration symbols. In other words, the controller 1510 may receive a PUSCH in the reconfiguration symbol based on the PUSCH scheduling informationwith priority over the TDD configuration information when a PUSCH transmission symbol specified by time domain resource assignment information within a downlink control information format containing the PUSCH scheduling information is the reconfiguration symbol.

As another example, it is assumed that the HARQ feedback information transmission symbol determined by the PDSCH-to-HARQ_feedback timing indicator included in the DCI for PDSCH scheduling, such as DCI format 1_0, 1_1, 1_2, etc. received from the UE, is a reconfiguration symbol. In other words, the controller 1510 may receive HARQ feedback information in the reconfiguration symbol based on the PUSCH scheduling informationwith priority over the TDD configuration information when an HARQ feedback information transmission symbol determined by a PDSCH-to-HARQ_feedback timing indicator of a downlink control information format containing the PUSCH scheduling information is the reconfiguration symbol.

Further, in an example, the additional information for uplink transmission in the reconfiguration symbol may be determined based on the configuration and activation of a bandwidth part or uplink bandwidth part configured for the reconfiguration symbol.

When an SBFD UL BWP is configured, or when SBFD UL BWP is configured and indicated to be activated for the UE, the uplink transmission operation in the reconfiguration symbol may be configured to be performed. Conversely, when an SBFD DL BWP is configured or when SBFD DL BWP is configured and indicated to be activated for the UE, the downlink reception operation in the reconfiguration symbol may be configured to be performed. In this case, the SBFD UL BWP or SBFD DL BWP may be configured separately from the existing downlink bandwidth part (DL BWP) or uplink bandwidth part (UL BWP).

Furthermore, the controller 1510 may indicate activation indication information about the SBFD UL BWP or SBFD DL BWP through the DCI format for PDSCH or PUSCH scheduling. In this case, the PDSCH scheduling or PUSCH scheduling DCI format may be configured to include an information area for activation indication of a separate SBFD UL BWP or SBFD DL BWP in addition to an activation indication information area for the DL BWP or UL BWP, such as the existing bandwidth part indicator. Alternatively, it may be configured to indicate activation for the SBFD DL BWP or SBFD UL BWP through the existing bandwidth part indicator.

According to an example, the controller 1510 may receive the PUSCH punctured or rate-matched for a frequency resource outside a frequency domain of the uplink subband when frequency domain resource allocation information on a downlink control information format including the PUSCH scheduling information includes a frequency resource outside the frequency domain of the uplink subband.

As an example, when resource allocation type 0 is applied to the transmission of the PUSCH, if some of the one or more resource block groups allocated for the transmission of the PUSCH at least partially overlap with the frequency domain of the uplink subband, the controller 1510 may receive the PUSCH only for physical resource blocks belonging to the frequency domain of the uplink subband among physical resource blocks (PRBs) constituting the resource block group. For example, in the case of an RBG partially overlapping with the uplink subband, the UE may perform frequency mapping on the PUSCH through only the frequency resource in the uplink subband boundary among the frequency resources within the corresponding RBG.

According to the embodiments described above, an uplink transmission may be performed more efficiently in a slot or symbol to which full-duplex communication is applied.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority to Korean Patent Application Nos. 10-2022-0097991 filed on August 5, 2022, and 10-2023-0102098 filed on August 4, 2023, in the Korean Intellectual Property Office, the disclosures of which are incorporated by reference herein in their entireties.

## Claims

1. A method for transmitting an uplink by a user equipment (UE), the method comprising:
determining a format of a symbol as one of a downlink symbol, an uplink symbol, and a flexible symbol based on time division duplex (TDD) configuration information received from a base station;
receiving configuration information about an uplink subband and a downlink subband for full-duplex communication;
receiving additional information for uplink transmission within a reconfiguration symbol in which the uplink subband is configured among symbols whose format is determined as the downlink symbol; and
transmitting the uplink in the reconfiguration symbol based on the additional information for the uplink transmission in the reconfiguration symbol,
wherein a frequency resource for the uplink transmission is limited to a frequency domain of the uplink subband.

2. The method of claim 1, wherein the additional information for uplink transmission in the reconfiguration symbol is determined based on PUSCH scheduling information or PDSCH scheduling information on a downlink control information format (DCI format) received from the base station.

3. The method of claim 2, wherein the transmitting the uplink in the reconfiguration symbol comprises:
transmitting a PUSCH in the reconfiguration symbol based on the PUSCH scheduling information with priority over the TDD configuration information when a PUSCH transmission symbol according to time domain resource assignment information on a downlink control information format including the PUSCH scheduling information is the reconfiguration symbol.

4. The method of claim 2, wherein the transmitting the uplink in the reconfiguration symbol comprises:
transmitting HARQ feedback information in the reconfiguration symbol based on the PUSCH scheduling information with priority over the TDD configuration information when an HARQ feedback information transmission symbol according to a PDSCH-to-HARQ_feedback timing indicator of a downlink control information format including the PUSCH scheduling information is the reconfiguration symbol.

5. The method of claim 1, wherein the additional information for the uplink transmission in the reconfiguration symbol is determined based on configuration and activation of an uplink bandwidth part or a bandwidth part, configured for the reconfiguration symbol.

6. The method of claim 2, wherein the transmitting the uplink in the reconfiguration symbol comprises:
transmitting the PUSCH through rate matching or puncturing for the PUSCH transmission for a frequency resource outside a frequency domain of the uplink subband when frequency domain resource allocation information about a downlink control information format including the PUSCH scheduling information includes a frequency resource outside the frequency domain of the uplink subband.

7. The method of claim 6, wherein the transmitting the uplink in the reconfiguration symbol comprises:
when resource allocation type 0 is applied to the PUSCH transmission, if some of one or more resource block groups (RBGs) allocated for the PUSCH transmission at least partially overlap with the frequency domain of the uplink subband, transmitting the PUSCH only for physical resource blocks belonging to the frequency domain of the uplink subband among physical resource blocks (PRBs) constituting the resource block group.

8. A method for receiving an uplink by a base station, the method comprising:
transmitting time division duplex (TDD) configuration information;
transmitting configuration information about an uplink subband and a downlink subband for full-duplex communication;
transmitting additional information for uplink reception in a reconfiguration symbol where the uplink subband is configured among symbols whose format is determined as the downlink symbol based on the TDD configuration information; and
receiving the uplink in the reconfiguration symbol based on the additional information for the uplink reception in the reconfiguration symbol,
wherein a frequency resource for the uplink reception is limited to a frequency domain of the uplink subband.

9. The method of claim 8, wherein the additional information for the uplink reception in the reconfiguration symbol is determined based on PUSCH scheduling information or PDSCH scheduling information about a downlink control information format (DCI format) transmitted to a user equipment (UE).

10. The method of claim 9, wherein the receiving the uplink in the reconfiguration symbol comprises:
receiving a PUSCH in the reconfiguration symbol based on the PUSCH scheduling information with priority over the TDD configuration information when a PUSCH reception symbol according to time domain resource assignment information about a downlink control information format including the PUSCH scheduling information is the reconfiguration symbol.

11. The method of claim 9, wherein the receiving the uplink in the reconfiguration symbol comprises:
receiving HARQ feedback information in the reconfiguration symbol based on the PUSCH scheduling information with priority over the TDD configuration information when an HARQ feedback information reception symbol according to a PDSCH-to-HARQ _feedback timing indicator of a downlink control information format including the PUSCH scheduling information is the reconfiguration symbol.

12. The method of claim 8, wherein the additional information for the uplink reception in the reconfiguration symbol is determined based on configuration and activation of an uplink bandwidth part or a bandwidth part, configured for the reconfiguration symbol.

13. The method of claim 9, wherein the receiving the uplink in the reconfiguration symbol comprises:
receiving the PUSCH punctured or rate-matched for a frequency resource outside a frequency domain of the uplink subband when frequency domain resource allocation information about a downlink control information format including the PUSCH scheduling information includes a frequency resource outside the frequency domain of the uplink subband.

14. The method of claim 13, wherein the receiving the uplink in the reconfiguration symbol comprises:
when resource allocation type 0 is applied to reception of the PUSCH, if some of one or more resource block groups (RBGs) allocated for reception of the PUSCH at least partially overlap the frequency domain of the uplink subband, receiving the PUSCH only for physical resource blocks belonging to the frequency domain of the uplink subband among physical resource blocks (PRBs) constituting the resource block group.

15. A user equipment (UE) transmitting an uplink, comprising:
a transmitter;
a receiver; and
a controller configured to control an operation of the transmitter and the receiver,
wherein the controller determines a format of a symbol as one of a downlink symbol, an uplink symbol, and a flexible symbol based on time division duplex (TDD) configuration information received from a base station, receives configuration information about an uplink subband and a downlink subband for full-duplex communication, receives additional information for uplink transmission in a reconfiguration symbol where the uplink subband is configured among symbols whose format is determined as the downlink symbol, and transmits the uplink in the reconfiguration symbol based on the additional information for the uplink transmission in the reconfiguration symbol, and
wherein a frequency resource for the uplink transmission is limited to a frequency domain of the uplink subband.

16. The UE of claim 15, wherein the additional information for the uplink transmission in the reconfiguration symbol is determined based on PUSCH scheduling information or PDSCH scheduling information about a downlink control information format (DCI format) received from the base station.

17. The UE of claim 16, wherein the controller transmits a PUSCH in the reconfiguration symbol based on the PUSCH scheduling information with priority over the TDD configuration information when a PUSCH transmission symbol according to time domain resource assignment information about a downlink control information format including the PUSCH scheduling information is the reconfiguration symbol.

18. The UE of claim 16, wherein the controller transmits HARQ feedback information in the reconfiguration symbol based on the PUSCH scheduling information with priority over the TDD configuration information when an HARQ feedback information transmission symbol according to a PDSCH-to-HARQ_feedback timing indicator of a downlink control information format including the PUSCH scheduling information is the reconfiguration symbol.

19. The UE of claim 15, wherein the additional information for the uplink transmission in the reconfiguration symbol is determined based on configuration and activation of an uplink bandwidth part or a bandwidth part, configured for the reconfiguration symbol.

20. The UE of claim 16, wherein the controller transmits the PUSCH through rate matching or perform puncturing of the PUSCH transmission for a frequency resource outside a frequency domain of the uplink subband when frequency domain resource allocation information about a downlink control information format including the PUSCH scheduling information includes a frequency resource outside the frequency domain of the uplink subband.
